# EUROPÄISCHE PATENTANMELDUNG

(11) **EP 1 149 746 A2**
(43) Veröffentlichungstag der Anmeldung: **31.10.2001**
(21) Anmeldenummer: 01105937.5
(22) Anmeldetag: 09.03.2001
(51) Int. Cl.: B60S 1/48

(54) **Scheibenwasch-Anlage, insbesondere für Kraftfahrzeuge**

(30) Priorität: 28.04.2000 DE 10020945
(71) Anmelder: ROBERT BOSCH GMBH, 70442 Stuttgart (DE)
(72) Erfinder: Bergner, Joao, 71134 Aidlingen (DE)

(57) **Zusammenfassung**

Scheibenwasch-Anlage, insbesondere für Kraftfahrzeuge, mit einem Waschwasser-Vorratsbehälter (1) zur Aufnahme von Waschwasser zur Reinigung von Scheiben, einem Frostschutzmittel-Vorratsbehälter (2) zur Aufnahme eines Frostschutzmittels zur Reduktion des Gefrierpunktes des Waschwassers, einer Misch- und Dosier-Einrichtung (5) zur Herstellung einer Mischung aus Frostschutzmittel und Waschwasser mit einem vorbestimmten Mischungsverhältnis, wobei die Misch- und Dosier-Einrichtung (5) mit dem Waschwasser-Vorratsbehälter (1) über eine Waschwasser-Verbindungsleitung (3) und mit dem Frostschutzmittel-Vorratsbehälter (2) über eine Frostschutzmittel-Verbindungsleitung (4) verbunden ist, und einer Düsen-Einrichtung (6) zum Sprühen der Mischung aus Frostschutzmittel und Waschwasser auf die zu reinigenden Scheiben, wobei die Düsen-Einrichtung (6) mit der Misch- und Dosier-Einrichtung (5) über eine Zuführleitung (8) verbunden ist.

## Beschreibung

Die Erfindung betrifft eine Scheibenwasch-Anlage, insbesondere für Kraftfahrzeuge.

Es ist durch offenkundige Vorbenutzung bekannt, Kraftfahrzeuge mit Scheibenwasch-Anlagen auszustatten, wobei Waschwasser aus einem Waschwasser-Vorratsbehälter auf die zu reinigende Scheibe gesprüht wird. Im Winter, d.h. bei zu erwartenden Außentemperaturen unterhalb des Gefrierpunkts von Wasser, wird dem Scheibenwaschwasser ein Frostschutzmittel zugesetzt, wobei die Menge des zugesetzten Frostschutzmittels so ausgelegt ist, daß das Waschwasser auch bei den in der entsprechenden Region zu erwartenden Tiefsttemperaturen auf der Scheibe nicht gefriert. Dem Waschwasser können ferner Reinigungszusätze zugesetzt werden, um die Reinigung der Scheiben zu verbessern. Nachteilig an den bekannten Scheibenwasch-Anlagen ist, daß häufig mehr Frostschutzmittel oder Reinigungsflüssigkeit verwendet wird, als zur Erreichung der gewünschten Ziele erforderlich ist. Der hohe Verbrauch ist für den Halter des Kraftfahrzeugs mit erhöhten Kosten verbunden. Darüber hinaus wird die Umwelt durch die vom Straßenrand ins Grundwasser gelangenden Frostschutzmittel und Reinigungsflüssigkeiten geschädigt.

Der Erfindung liegt die Aufgabe zugrunde, eine Scheibenwasch-Anlage zu schaffen, bei der eine optimale Scheibenreinigung bei gleichzeitig möglichst geringem Einsatz von Zusatzstoffen zu dem Waschwasser sichergestellt ist.

Die Aufgabe wird durch die Merkmale des Anspruchs 1 gelöst. Der Kern der Erfindung besteht darin, zusätzlich zu einem Waschwasser-Vorratsbehälter einen Frostschutzmittel-Vorratsbehälter vorzusehen, wobei beide mit einer Misch- und Dosier-Einrichtung verbunden sind, welche eine optimale Mischung von Waschwasser und Frostschutzmittel einer Düsen-Einrichtung zuführt.

Weitere vorteilhafte Ausgestaltungen der Erfindung ergeben sich aus den Unteransprüchen.

Zusätzliche Merkmale und Einzelheiten der Erfindung ergeben sich aus der Beschreibung eines Ausführungsbeispiels anhand der Zeichnung. Es zeigt

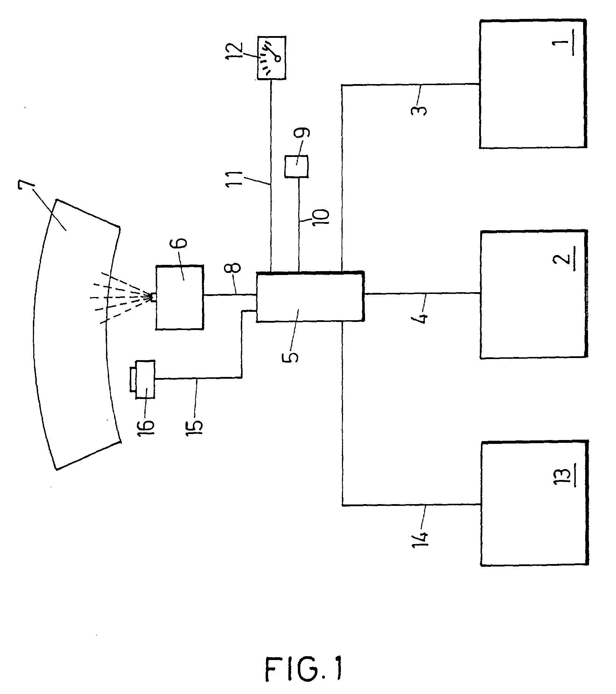

Fig. 1 eine schematische Darstellung einer Scheibenwasch-Anlage.

Eine Scheibenwaschanlage für Kraftfahrzeuge weist einen Waschwasser-Vorratsbehälter 1 zur Aufnahme von Waschwasser sowie einen Frostschutzmittel-Vorratsbehälter 2 zur Aufnahme eines Frostschutzmittels zur Reduktion des Gefrierpunkts des Waschwassers auf. Bei dem Waschwasser handelt es sich in der Regel um normales Leitungswasser. Bei dem Frostschutzmittel handelt es sich um ein handelsübliches Frostschutzmittel, das beispielsweise einen Alkohol enthält. Der Waschwasser-Vorratsbehälter 1 und der Frostschutzmittel-Vorratsbehälter 2 sind über eine Waschwasser-Verbindungsleitung 3 bzw. eine Frostschutzmittel-Verbindungsleitung 4 mit einer Misch- und Dosier-Einrichtung 5 verbunden. Diese erlaubt die einstellbar dosierte Zugabe des Frostschutzmittels zu dem Waschwasser. Die Misch- und Dosier-Einrichtung 5 ist mit einer Düsen-Einrichtung 6 verbunden, die die Mischung aus Waschwasser und Frostschutzmittel auf eine zu reinigende Scheibe 7 eines Kraftfahrzeugs sprüht. Die Misch- und Dosier-Einrichtung 5 und die Düsen-Einrichtung 6 sind über ein Zuführleitung 8 miteinander verbunden.

Im folgenden wird der Aufbau der Misch- und Dosier-Einrichtung 5 näher beschrieben. Die Einrichtung 5 weist einen Temperatur-Fühler 9 auf, der über eine Datenübertragungs-Leitung 10 mit der Einrichtung 5 verbunden ist. Der Temperatur-Fühler 9 dient der Ermittlung der Außentemperatur um das Kraftfahrzeug. Die Einrichtung 5 ist ferner über eine Datenübertragungs-Leitung 11 mit einer Eingabe-Einrichtung 12 verbunden. Durch die Eingabe-Einrichtung 12 ist das Mischungsverhältnis zwischen Waschwasser und Frostschutzmittel manuell einstellbar.

Die Misch- und Dosier-Einrichtung 5 ist ferner mit einem Reinigungsflüssigkeits-Vorratsbehälter 13 über eine Reinigungsflüssigkeits-Verbindungsleitung 14 verbunden, wobei es sich hierbei um eine zusätzliche Option der beschriebenen Scheibenwasch-Anlage handelt und letztere auch ohne diese funktionsfähig ist. In diesem Fall weist die Misch- und Dosier-Einrichtung 5 einen mit ihr über eine Datenübertragungs-Leitung 15 verbundenen Verschmutzungs-Sensor 16 zur Ermittlung des Verschmutzungsgrades der zu reinigenden Scheibe 7 auf. Bei der Reinigungsflüssigkeit handelt es sich um ein handelsübliches, flüssiges Reinigungsmittel, das besonders hartnäkkigen, insbesondere wasserunlöslichen Schmutz von Glasflächen löst.

Im folgenden wird die Funktionsweise der Scheibenwasch-Anlage zunächst ohne Zugabe von Reinigungsflüssigkeit beschrieben. Bei Temperaturen oberhalb des Gefrierpunktes wird Waschwasser aus dem Waschwasser-Vorratsbehälter 1 durch die Misch- und Dosier-Einrichtung 5 gepumpt und oberhalb des Gefrierpunktes wird Waschwasser aus dem Waschwasser-Vorratsbehälter 1 durch die Misch- und Dosier-Einrichtung 5 gepumpt und über die Düsen-Einrichtung 6 auf die zu reinigende Scheibe gesprüht, auf der das Wasser durch einen oder mehrere Scheibenwischer verteilt wird und die Scheiben gereinigt werden. Werden von dem Temperatur-Fühler 9 Außentemperaturen unterhalb des Gefrierpunktes, d.h. 0 °C, gemessen, so wird durch die Misch- und Dosier-Einrichtung 5 dem Waschwasser eine bestimmte Menge Frostschutzmittel zugesetzt, um dessen Einfrieren auf der Scheibe 7 zu vermeiden. Das Mischungsverhältnis von Waschwasser und Frostschutzmittel wird in Abhängigkeit von der gemessenen Außentemperatur eingestellt, so daß zum einen sichergestellt ist, daß die Mischung auf der Scheibe 7 nicht gefriert und zum anderen der Verbrauch an Frostschutzmittel möglichst gering ist, was auch unter dem Gesichtspunkt des Umweltschutzes von Bedeutung ist. Sollte das automatisch eingestellte Mischungsverhältnis von Waschwasser und Frostschutzmittel für den Fahrer des Kraftfahrzeuges unbefriedigend sein, so kann dieser über die Eingabe-Einrichtung 12 die Zugabe des Frostschutzmittels manuell verändern. Um ein Einfrieren des Waschwassers zu vermeiden, kann eine Heizung hierfür vorgesehen sein.

Zusätzlich kann in Abhängigkeit von der Verschmutzung der Scheibe 7 zu dem Waschwasser die Reinigungsflüssigkeit aus dem Vorratsbehälter 13 hinzugegeben werden. Die Dosierung erfolgt automatisch in Abhängigkeit der Daten, die der Verschmutzungs-Sensor 16 über den Verschmutzungsgrad der Scheibe 7 meldet. Sollte der Fahrer des Kraftfahrzeugs dies wünschen, so kann er die Dosis der zugesetzten Reinigungsflüssigkeit durch die Eingabe-Einrichtung 12 verändern. Durch die optimal dosierte Zugabe von Reinigungsflüssigkeit zu dem Waschwasser wird die Sauberkeit der zu reinigenden Scheibe optimiert, wobei gleichzeitig die Menge der eingesetzten Reinigungsflüssigkeit möglichst gering gehalten wird.

## Patentansprüche

1. Scheibenwasch-Anlage, insbesondere für Kraftfahrzeuge, mit
a) einem Waschwasser-Vorratsbehälter (1) zur Aufnahme von Waschwasser zur Reinigung von Scheiben,
b) einem Frostschutzmittel-Vorratsbehälter (2) zur Aufnahme eines Frostschutzmittels zur Reduktion des Gefrierpunktes des Waschwassers,
c) einer Misch- und Dosier-Einrichtung (5) zur Herstellung einer Mischung aus Frostschutzmittel und Waschwasser mit einem vorbestimmten Mischungsverhältnis, wobei die Misch- und Dosier-Einrichtung (5)
i) mit dem Waschwasser-Vorratsbehälter (1) über eine Waschwasser-Verbindungsleitung (3) und
ii) mit dem Frostschutzmittel-Vorratsbehälter (2) über eine Frostschutzmittel-Verbindungsleitung (4) verbunden ist, und
d) einer Düsen-Einrichtung (6) zum Sprühen der Mischung aus Frostschutzmittel und Waschwasser auf die zu reinigenden Scheiben, wobei die Düsen-Einrichtung (6) mit der Misch- und Dosier-Einrichtung (5) über eine Zuführleitung (8) verbunden ist.

2. Scheibenwasch-Anlage gemäß Anspruch 1, **dadurch gekennzeichnet, daß** das Mischungsverhältnis von Frostschutzmittel und Waschwasser manuell einstellbar ist.

3. Scheibenwasch-Anlage gemäß Anspruch 1 oder 2, **dadurch gekennzeichnet, daß** die Misch- und Dosiereinrichtung (5) einen Temperatur-Fühler (9) zur Ermittlung der Außentemperatur aufweist.

4. Scheibenwasch-Anlage gemäß Anspruch 3, **dadurch gekennzeichnet, daß** das Mischungsverhältnis von Frostschutzmittel und Waschwasser in Abhängigkeit von der vom Temperatur-Fühler (9) gemessenen Außentemperatur einstellbar ist.

5. Scheibenwasch-Anlage gemäß einem der vorangehenden Ansprüche, **dadurch gekennzeichnet, daß** ein Reinigungsflüssigkeits-Vorratsbehälter (13) zur Aufnahme einer Reinigungsflüssigkeit zur Entfernung von Schmutz von den zu reinigenden Scheiben vorgesehen ist.

6. Scheibenwasch-Anlage gemäß Anspruch 5, **dadurch gekennzeichnet, daß** der Reinigungsflüssigkeits-Vorratsbehälter (13) mit der Mischund Dosier-Einrichtung (5) über eine Reinigungsflüssigkeits-Verbindungsleitung (14) verbunden ist.

7. Scheibenwasch-Anlage gemäß Anspruch 6, **dadurch gekennzeichnet, daß** ein vorbestimmtes Mischungsverhältnis zwischen Waschwasser, Frostschutzmittel und Reinigungsflüssigkeit durch die Misch- und Dosiereinrichtung (5) einstellbar ist.

8. Scheibenwasch-Anlage gemäß Anspruch 7, **dadurch gekennzeichnet, daß** die Misch- und Dosier-Einrichtung (5) einen Verschmutzungs-Sensor (16) zur Bestimmung des Verschmutzungsgrades der zu reinigenden Scheiben aufweist.

9. Scheibenwasch-Anlage gemäß Anspruch 8, **dadurch gekennzeichnet, daß** das Mischungsverhältnis von Waschwasser und Reinigungsflüssigkeit in Abhängigkeit von der vom Verschmutzungs-Sensor (16) ermittelten Verschmutzung der zu reinigenden Scheiben automatisch einstellbar ist.

10. Scheibenwasch-Anlage gemäß Anspruch 8, **dadurch gekennzeichnet, daß** das Mischungsverhältnis von Waschwasser und Reinigungsflüssigkeit manuell einstellbar ist.
